# EUROPÄISCHE PATENTSCHRIFT

(11) **EP 3 617 555 B1**
(45) Veröffentlichungstag und Bekanntmachung des Hinweises auf die Patenterteilung: **07.09.2022**
(21) Anmeldenummer: 19184700.3
(22) Anmeldetag: 05.07.2019
(51) Int. Cl.: F16H 55/52, F16H 9/16

(54) **BAUKASTENSYSTEM ZUR HERSTELLUNG ZUMINDEST EINES GETRIEBES**
MODULAR SYSTEM FOR PRODUCING AT LEAST ONE GEARBOX
SYSTÈME MODULAIRE D'AU MOINS UNE BOÎTE DE VITESSE

(30) Priorität: 03.09.2018 DE 102018121420
(43) Veröffentlichungstag der Anmeldung: 04.03.2020
(73) Patentinhaber: CLAAS Selbstfahrende Erntemaschinen GmbH, 33428 Harsewinkel (DE)
(72) Erfinder: Koch, Markus, 48369 Saerbeck (DE)
(74) Vertreter: CLAAS Gruppe

(56) Entgegenhaltungen:
- US-A- 3 869 932
- US-A- 4 137 786
- US-A- 4 173 155
- US-A- 6 012 998
- US-A1- 2002 042 313
- US-A1- 2006 154 761
- US-A1- 2017 261 102

## Beschreibung

Die vorliegende Erfindung betrifft ein Baukastensystem gemäß dem Oberbegriff des Anspruches 1.

Zum Antreiben von Arbeitsorganen landwirtschaftlicher Erntemaschinen werden vielfach stufenlose Getriebe, die als Umschlingungsgetriebe ausgeführt sind, eingesetzt. Das stufenlose Getriebe wird auch als Variatorgetriebe bezeichnet.

Ein solches stufenloses Getriebe umfasst dabei folgende Grundkomponenten:
ein Antriebsscheibenpaket und ein Abtriebsscheibenpaket, die jeweils zwei konische Regelscheiben aufweisen, drehmomentübertragende Bauteile, auf denen die Regelscheiben von Antriebsscheibenpaket und Abtriebsscheibenpaket angeordnet sind, wobei die drehmomentübertragenden Bauteile jeweils eine Antriebswelle,
eine Nabe und einen hohlzylindrischen Übertragungsabschnitt umfassen, wobei von dem Antriebsscheibenpaket und dem Abtriebsscheibenpaket jeweils zumindest eine Regelscheibe axial verschiebbar auf der jeweiligen Antriebswelle angeordnet ist.

Ein stufenloses Getriebe der vorstehend beschriebenen Art ist aus der DE 198 02 605 A1 und aus der US6012998 A bekannt. Ein Antriebsscheibenpaket weist eine stationäre konische Regelscheibe und eine bewegbare Regelscheibe auf, welche durch einen Riemen mit einem Abtriebsscheibenpaket, welches ebenfalls eine stationäre konische Regelscheibe und eine bewegbare Regelscheibe aufweist, trieblich verbunden ist. Die stationäre Regelscheibe des Antriebsscheibenpaketes ist auf einer Antriebswelle und die stationäre Regelscheibe des Abtriebsscheibenpaketes ist auf einer getriebenen Welle angeordnet, wobei die Antriebswelle bzw. die getriebene Welle und die jeweilige darauf angeordnete stationäre Regelscheibe einstückig ausgeführt sind. Die jeweilige bewegbare Regelscheibe des Antriebsscheibenpaketes und des Abtriebsscheibenpaketes ist einstückig mit einem hohlzylindrischen Abschnitt ausgeführt, mit welchem die jeweilige bewegbare Regelscheibe auf der Antriebswelle bzw. der getriebenen Welle angeordnet ist, um mittels einer Kugelfedernut einer Kugelfederkupplung nur in einer Axialrichtung bewegbar zu sein.

Die Verwendung solcher stufenlosen Getriebe erfolgt zum Antreiben verschiedener Arbeitsorgane einer Erntemaschine, wobei sowohl zum Antreiben der jeweiligen Arbeitsorgane als auch an Erntemaschinen unterschiedlicher Leistungsklassen bzw. Baureihen an diese drehzahlmäßig angepasste stufenlose Getriebe zur Anwendung kommen. Die hierdurch bedingte notwendige Komplexität der stufenlosen Getriebe, insbesondere die einstückige Ausführung der Antriebswelle und stationären Regelscheibe bzw. der einstückigen Ausführung von hohlzylindrischem Abschnitt und der mit diesem verschiebbaren Regelscheibe, wie sie aus dem genannten Stand der Technik bekannt sind, führen dazu, dass für unterschiedliche Baureihen von Erntemaschinen sowie innerhalb der Baureihen individuell konfigurierte stufenlose Getriebe vorzusehen sind, was kostenintensiv ist. Zudem erfordert die einstückige Ausführung besondere fertigungstechnische Möglichkeiten. Somit geht ein hoher fertigungstechnischer und logistischer Aufwand bei der Herstellung von Erntemaschinen unterschiedlicher Leistungsklassen bzw. Baureihen einher, wen diese mit stufenlosen Getrieben gemäß der DE 198 02 605 A1 ausgestattet werden.

Daher ist es die Aufgabe der vorliegenden Erfindung, ein Baukastensystem bereitzustellen, durch welche die Bereitstellung von als Getriebemodulen ausgeführten stufenlosen Getrieben für Erntemaschinen unterschiedlicher Leistungsklassen bzw. Baureihen bzw. zumindest einer Erntemaschine mit unterschiedlichen Arbeitsorganen vereinfacht und kosteneffizienter darstellbar wird.

Diese Aufgabe wird erfindungsgemäß durch ein Baukastensystem nach Anspruch 1 gelöst.

Vorteilhafte Weiterbildungen sind Gegenstand der Unteransprüche.

Mittels des Baukastensystems können auf der Basis von sechs Grundkomponenten durch eine geeignete Kombination dieser Grundkomponenten miteinander zumindest zwei Getriebemodule ausgebildet werden, durch die unterschiedliche Drehzahlbereiche bereitgestellt werden. Dabei wird durch die im Wesentlichen baugleiche Ausführung zweier zur Führung und Kraftübertragung eingerichteter Grundkomponenten der Getriebemodule eine Vereinfachung hinsichtlich der Herstellung der stufenlosen Getriebe und bezüglich der Flexibilität, mit der durch die zumindest zwei Getriebemodule verschiedene Drehzahlbereiche für unterschiedliche Arbeitsorgane zumindest einer Erntemaschine innerhalb einer Baureihe realisierbar sind, erreicht. Die zumindest zwei Getriebemodule ermöglichen es, die verschiedenen stufenlosen Getriebe innerhalb einer Baureihe und übergreifend für mehrere unterschiedliche Baureihen landwirtschaftlicher Erntemaschinen abzubilden. Unter dem Begriff Getriebemodul im Sinne der vorliegenden Erfindung wird ein stufenloses Getriebe verstanden, welches Komponenten zur Führung und Kraftübertragung aufweist, die untereinander auswechselbar sind.

Während das aus dem Stand der Technik bekannte stufenloses Getriebe sowohl innerhalb einer Baureihe von Erntemaschinen für unterschiedliche Arbeitsorgane als auch über unterschiedliche Baureihen von Erntemaschinen gleichen Typs hinweg individuell spezifiziert ist, kann das erfindungsgemäße Baukastensystem für das zumindest eine Getriebemodul in mehreren Baureihen von Erntemaschinen gleichen Typs zum Einsatz kommen.

Die jeweilige Antriebswelle ist als Hohlwelle ausgeführt

Die Regelscheiben des Antriebsscheibenpaketes und des Abtriebsscheibenpaketes der Getriebemodule weisen einen identischen strukturellen Aufbau auf. Unter einem identischen strukturellen Aufbau wird die geometrische Form der Regelscheiben verstanden, die innerhalb eines Getriebemoduls und übergreifend für die zumindest zwei Getriebemodule identisch ist. Insbesondere ist eine möglichst einfache geometrische Form der Regelscheiben vorgesehen. Insbesondere sind die Regelscheiben des Antriebsscheibenpaketes und des Abtriebsscheibenpaketes rotationssymmetrisch ausgebildet. Dabei weisen die Regelscheiben des Antriebsscheibenpaketes und des Abtriebsscheibenpaketes einen im Wesentlichen kegelstumpfförmigen Querschnitt auf. Dies ermöglicht eine kostengünstige Fertigung beispielsweise mittels eines Urformverfahrens, insbesondere durch Gießen. Die Regelscheiben können dabei mit den drehmomentübertragenden Bauteilen, welche die Regelscheiben unmittelbar aufnehmen, insbesondere durch Schraubverbindungen, lösbar verbunden sein.

Die hohlzylindrischen Ubertragungsabschnitte auf Antriebsseite und Abtriebsseite der Getriebemodule sind baugleich ausgeführt. Die hohlzylindrischen Übertragungsabschnitte sind auf der Antriebsseite und der Abtriebsseite dazu ausgebildet die jeweilige Regelscheibe des Antriebsscheibenpaketes als auch des Abtriebsscheibenpaketes aufzunehmen, die jeweils ortsfest auf der Antriebswelle angeordnet sind. Dadurch kann eine baugleiche Ausführung des hohlzylindrischen Übertragungsabschnittes über die zumindest zwei Getriebemodule hinweg vereinfacht werden.

Gemäß einer vorteilhaften Weiterbildung können die Regelscheiben des Antriebsscheibenpaketes und des Abtriebsscheibenpaketes und die hohlzylindrischen Übertragungsabschnitte innerhalb eines Getriebemoduls untereinander austauschbar sein. Dabei erfolgt ein Austausch der Regelscheiben des Antriebsscheibenpaketes und des Abtriebsscheibenpaketes jeweils paarweise.

Gemäß einem weiteren vorteilhaften Aspekt können hydraulisch betätigbare Verstellvorrichtungen zweier Getriebemodule zum axialen Verschieben zumindest einer der Regelscheiben des Antriebsscheibenpaketes baugleich ausgeführt sein.

Bevorzugt können die Regelscheiben mit identische Abmessungen aufweisenden Ringbünden ausgeführt sein. Mittels der Ringbünde wird eine Befestigung der Regelscheiben sowohl an dem jeweiligen Übertragungsabschnitt als auch der jeweiligen Nabe der Antriebsseite und der Abtriebsseite des Getriebemoduls ermöglicht.

Insbesondere können das jeweilige Antriebsscheibenpaket und Abtriebsscheibenpaket der zumindest zwei Getriebemodule jeweils Regelscheiben mit identischen Außendurchmessern aufweisen. Dadurch lassen sich definierte Drehzahlbereiche darstellen, innerhalb derer ein durch eine Getriebemodul angetriebenes Arbeitsorgan betreibbar ist. So kann das eine Getriebemodul Regelscheiben mit einem ersten Außendurchmesser für Antriebsscheibenpaket und Abtriebsscheibenpaket und das zumindest eine weitere Getriebemodul Regelscheiben mit einem zweiten Außendurchmesser für Antriebsscheibenpaket und Abtriebsscheibenpaket aufweisen. Durch die unterschiedlichen Außendurchmesser der Regelscheiben, die für das Antriebsscheibenpaket und Abtriebsscheibenpaket eines jeweiligen Getriebemoduls identisch sind, können die zumindest zwei Getriebemodule zumindest zwei wenigstens teilweise voneinander abweichende Drehzahlbereiche bereitstellen.

Bevorzugt können die Regelscheiben des Antriebsscheibenpaketes und/oder des Abtriebsscheibenpaketes zwischen den zumindest zwei Getriebemodulen austauschbar sein. Eine Austauschbarkeit der Regelscheiben zwischen den zumindest zwei Getriebemodulen erhöht die Flexibilität und Vielfalt hinsichtlich der darstellbaren Drehzahlbereiche.

Hierzu können die Außendurchmesser der Regelscheiben des Antriebsscheibenpaketes und/oder des Abtriebsscheibenpaketes innerhalb der zumindest zwei Getriebemodule variieren. Dabei kann das Antriebsscheibenpaket und das Abtriebsscheibenpaket des jeweiligen Getriebemoduls Regelscheiben mit einem ersten Außendurchmesser und Regelscheiben mit einem zweiten Außendurchmesser aufweisen, wobei der erste Außendurchmesser größer als der zweite Außendurchmesser ist. Die für unterschiedliche Baureihen von Erntemaschinen erforderliche Drehzahlflexibilität wird in die vereinfache Geometrie der einen identischen strukturellen Aufbau aufweisenden Regelscheiben verlagert.

Um die Montage innerhalb des jeweiligen Getriebemoduls sowie die Auswechselbarkeit zwischen den zumindest zwei Getriebemodulen zu vereinfachen, können die Regelscheiben des jeweiligen Antriebsscheibenpaketes bzw. Abtriebsscheibenpaketes mittels lösbarer Verbindungen, insbesondere Schraubverbindungen, an der Nabe bzw. dem hohlzylindrischen Übertragungsabschnitt befestigt sein. Bevorzugt können die Regelscheiben und die Übertragungsabschnitte als Gussteile ausgebildet sein. Hierdurch wird eine kostengünstige Fertigung in großer Stückzahl realisierbar.

Gemäß dem Anspruch 11 wird eine Erntemaschine mit zumindest einem Arbeitsorgan, das durch zumindest einem stufenlosen Getriebe angetrieben ist, vorgeschlagen, wobei das zumindest eine stufenlose Getriebe als ein mittels eines Baukastensystems nach einem der Ansprüche 1 bis 10 hergestelltes Getriebemodul ausgebildet ist.

Insbesondere kann die zumindest eine Erntemaschine als ein Mähdrescher ausgeführt sein. Mähdrescher weisen eine Vielzahl von Arbeitsorganen auf, die bevorzugt mittels Riementrieben angetrieben werden. Um zumindest einige der Arbeitsorgane drehzahlvariabel antreiben zu können, können die zumindest zwei Getriebemodule zum Einsatz kommen. Aufgrund der Kombinierbarkeit der zumindest zwei Grundkomponenten, der Regelscheiben und der hohlzylindrischen Abschnitte untereinander, sind die zumindest zwei Getriebemodule flexibel an für die unterschiedlichen Arbeitsorgane spezifischen Drehzahlbereiche, innerhalb derer diese betrieben werden, anpassbar.

Hierbei kann wenigstens eines der zumindest zwei Getriebemodule dem Antrieb von als Vorsatzgerät, Dresch-Trenneinrichtung und/oder Abscheideeinrichtung ausgeführten Arbeitsorganen der Erntemaschine einer Baureihe dienen. Für das Antreiben dieser Arbeitsorgane können unterschiedliche Drehzahlbereiche erforderlich sein, welche durch die zumindest zwei Getriebemodule darstellbar sind. Insbesondere können die zumindest zwei Getriebemodule dem baureihenübergreifenden Antrieb zumindest einer Dreschtrommel der Dresch-Trenneinrichtung und/oder einem als Abscheiderotor ausgebildeten Förderorgan der Abscheideeinrichtung dienen.

Die vorliegende Erfindung wird nachstehend anhand eines in den Zeichnungen dargestellten Ausführungsbeispieles näher erläutert.

Es zeigen:
- Fig. 1: eine schematische Ansicht einer Erntemaschine;
- Fig. 2: als Getriebemodule ausgebildete stufenlose Getriebe für eine Erntemaschine;
- Fig. 3: eine Schnittansicht eines Antriebsscheibenpakete eines ersten Getriebemoduls gemäß Fig. 2;
- Fig. 4: eine Schnittansicht eines Abtriebsscheibenpaketes eines zweiten Getriebemoduls gemäß Fig. 2.

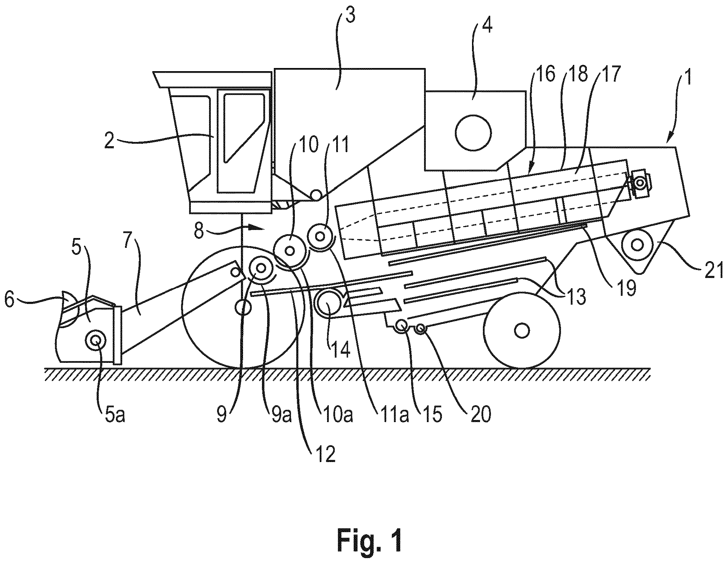

In der Fig. 1 ist mit 1 eine als selbstfahrender Mähdrescher ausgeführte Erntemaschine bezeichnet, die eine Fahrerkabine 2, einen hinter dieser liegenden Korntank 3 sowie anschließend an diesen eine Brennkraftmaschine 4 aufweist. Weiterhin nimmt die selbstfahrende Erntemaschine 1 in ihrem Frontbereich einen Erntevorsatz 5 auf, der nur teilweise dargestellt und beispielsweise als Getreide- beziehungsweise Rapsschneidwerk ausgebildet ist. Als Erntevorsatz 5 kann auch ein Maisvorsatz verwendet werden, der die Maisstängel erfasst und der mittels einer Pflückeinrichtung die Maiskolben von den Maisstängeln trennt.

Der Erntevorsatz 5 erfasst das zu erntende Halmgut mit einer Haspel 6 und schneidet es mittels eines nicht näher dargestellten Mähwerks bodennah ab, woraufhin das geschnittene Erntegut durch eine Querförderschnecke 5a in einen Mittenbereich des Erntevorsatzes 5 gefördert wird. Aus dem Mittenbereich des Erntevorsatzes 5 gelangt das Erntegut in einen Schrägförderer 7, der das Erntegut einer Dresch- und Trenneinrichtung 8 zugeführt. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Abscheidetrommel 11. Diesen Trommeln 9, 10 und 11 sind jeweils Abscheidekörbe 9a, 10a und 11 a zugeordnet. Die geernteten Körner oder Früchte gelangen durch die Abscheidekörbe 9a, 10a und 11 a auf einen Vorbereitungsboden 12, über welchen sie schwingend bewegten Sieben einer Reinigungsvorrichtung 13 zugeführt werden. Mit der Reinigungsvorrichtung 13 wirkt ein Reinigungsgebläse 14 zusammen, welches im Bereich der Siebe einen Luftstrom erzeugt, wodurch Spreu und Kurzstroh aus der Erntemaschine 1 herausbefördert werden. Die durch die Siebe der Reinigungsvorrichtung 13 hindurchtretenden Körner oder Früchte gelangen in eine Körnerschnecke 15, die diese zu einem mit dem Korntank 3 verbundenen, nicht näher dargestellten Körnerelevator transportiert.

Sämtliche Anteile des Halmgutes, die die Abscheidekörbe 9a, 10a und 11a nicht in Richtung des Vorbereitungsbodens 12 passieren und bei denen es sich um Stroh, Kurzstroh, Ähren und gegebenenfalls Grannen handelt, werden mittels der Abscheidetrommel 11 oder, alternativ dazu, mittels einer Strohwendetrommel, einer Abscheideeinrichtung 16 zur Restkornabscheidung zugeführt. Diese Abscheideeinrichtung 16 zur Restkornabscheidung weist bei der in der Figur 1 dargestellten Erntemaschine 1 zumindest ein in Längsrichtung der Erntemaschine 1 verlaufendes trommelartiges Förderorgan 17 auf, das auch als Trennrotor bezeichnet wird. Je nach Leistungsklasse bzw. Baureihe der Erntemaschine 1 kann das Förderorgan 17 auch zwei Trennrotoren umfassen. Alternativ kann die Abscheideeinrichtung 16 einer anderen Leistungsklasse bzw. Baureihe der Erntemaschine 1 auch als Hordenschüttler ausgeführt sein.

Das trommelartige Förderorgan 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die vorgenannten Öffnungen des Abscheidegehäuses 18 gelangen Restkorn, Spreu, Ähren und eventuell Kurzstroh auf einen Rücklaufboden 19, der diese Bestandteile der Reinigungseinrichtung 13 zuführt. Die Bestandteile dieses Erntegutstromes, die, wie z. B. nicht ausgedroschene Ähren, von den Sieben der Reinigungsvorrichtung 13 abgeschieden werden, gelangen in eine Förderschnecke 20, die diese Bestandteile des Erntegutes einer nicht näher dargestellten Überkehr zuführt. Die Überkehr fördert diese Bestandteile des Erntegutes zurück in die Dresch- und Trenneinrichtung 8. Das durch das Abscheidegehäuse 18 geförderte Stroh verlässt dieses an dessen hinterem Ende, wo das Stroh in einen Strohhäcksler 21 gelangt.

Der Erntevorsatz 5, die Dresch- und Trenneinrichtung 8 oder das Förderorgan 17 werden nachfolgend vereinfachend als Arbeitsorgane 22 beschrieben. Das Antreiben dieser Arbeitsorgane 22 erfolgt mittels zumindest eines Hauptriementriebes der Erntemaschine 1. Dabei ist für einen drehzahlvarianten Antrieb der einzelnen Arbeitsorgane 22, d.h. einen Antrieb zumindest zweier Arbeitsorgane 22 innerhalb unterschiedlicher Drehzahlbereiche, vorgesehen, diese jeweils durch ein stufenloses Getriebe, das als Umschlingungsgetriebe ausgeführt ist, mit dem zumindest einen Hauptriementrieb trieblich zu koppeln. Stufenlose Getriebe kommen auch innerhalb eines Arbeitsorgans 22 zur Anwendung, wenn diese mehrere angetriebene Komponenten umfassen, die mit unterschiedlichen, aber in einem definierten Verhältnis zueinander stehenden Drehzahlen betrieben werden. Dies ist beispielsweise bei der Dresch- und Trenneinrichtung 8 der Fall, deren Vorbeschleunigungstrommel 9 und Dreschtrommel 10 in einem festen Drehzahlverhältnis zueinander betrieben werden. Die Drehzahl der Dreschtrommel 10 lässt sich dabei variieren, um den Ausdrusch von Erntegut je nach Erntegutart und -eigenschaft mit unterschiedlicher Intensität zu ermöglichen.

Erntemaschinen 1 unterschiedlicher Leistungsklassen bzw. Baureihen unterscheiden sich unter anderem in der jeweils zur Verfügung stehenden Antriebsleistung der Brennkraftmaschine 4, im maximal erreichbaren Erntegutdurchsatz der Erntemaschinen 1, aber auch durch die Bauform und Ausgestaltung der Arbeitsorgane 22. Entsprechend hoch ist der Grad der Komplexität der für die Arbeitsorgane 22 vorgesehenen stufenlosen Getriebe.

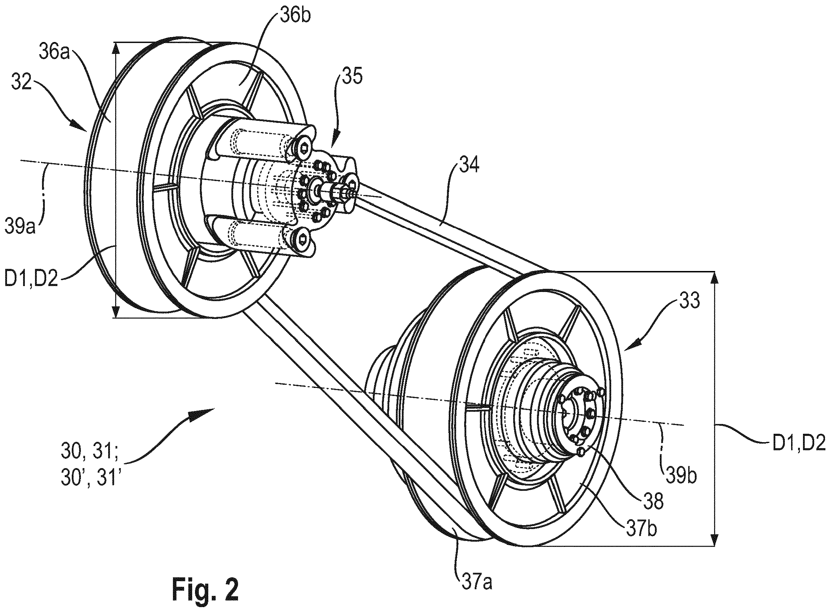

In Fig. 2 ist ein erstes Getriebemodul 30 als ausgebildetes stufenloses Getriebe 31 sowie ein zweites Getriebemodul 30'als ausgebildetes stufenloses Getriebe 31' für die Erntemaschine 1 dargestellt. Das stufenlose Getriebe 31, 31' umfasst ein Antriebsscheibenpaket 32 und ein Abtriebsscheibenpaket 33, die jeweils zwei konische Regelscheiben 36a, 36b; 37a, 37b aufweisen, die jeweils um eine Rotationsachse 39a, 39b drehbar sind. Zumindest eine Regelscheibe 36b, 37b des Antriebsscheibenpaketes 32 und des Abtriebsscheibenpaketes 33 ist in axialer Richtung, d.h. entlang der jeweiligen Rotationsachse 39a, 39b, verstellbar ausgeführt. Ein Keilriemen 34 verläuft zwischen den Regelscheiben 36a, 36b des Antriebsscheibenpaketes 32 und den Regelscheiben 37a, 37b des Abtriebsscheibenpaketes 33. Dem Antriebsscheibenpaket 32 ist eine hydraulisch betätigbare Verstellvorrichtung 35 zugeordnet, durch welches zumindest die Regelscheibe 36b axial verschiebbar ist. Alle Regelscheiben 36a, 36b; 37a, 37b des ersten Getriebemoduls 30 weisen jeweils einen gleichen Außendurchmesser D1 auf. Alle Regelscheiben 36a, 36b; 37a, 37b des zweiten Getriebemoduls 30' weisen jeweils einen gleichen Außendurchmesser D2 auf.

Das zweite als stufenloses Getriebe 31' ausgeführtes Getriebemodul 30' umfasst ebenfalls das Antriebsscheibenpaket 32 und das Abtriebsscheibenpaket 33, die jeweils zwei konische Regelscheiben 36a, 36b; 37a, 37b aufweisen, die jeweils um eine Rotationsachse 39a, 39b drehbar sind. Zumindest eine Regelscheibe 36b, 37b des Antriebsscheibenpaketes 32 und des Abtriebsscheibenpaketes 33 ist in axialer Richtung, d.h. entlang der jeweiligen Rotationsachse 39a, 39b, verstellbar ausgeführt. Der Keilriemen 34 verläuft zwischen den Regelscheiben 36a, 36b des Antriebsscheibenpaketes 32 und den Regelscheiben 37a, 37b des Abtriebsscheibenpaketes 33. Dem Antriebsscheibenpaket 32 ist eine hydraulisch betätigbare Verstellvorrichtung 35 zugeordnet, durch welche zumindest die Regelscheibe 36b axial verschiebbar ist. Alle Regelscheiben 36a, 36b; 37a, 37b des zweiten Getriebemoduls 30' weisen einen gleichen Außendurchmesser D2 auf, der sich von dem Außendurchmesser D1 der Regelscheiben 36a, 36b; 37a, 37b des ersten Getriebemoduls 30 unterscheidet.

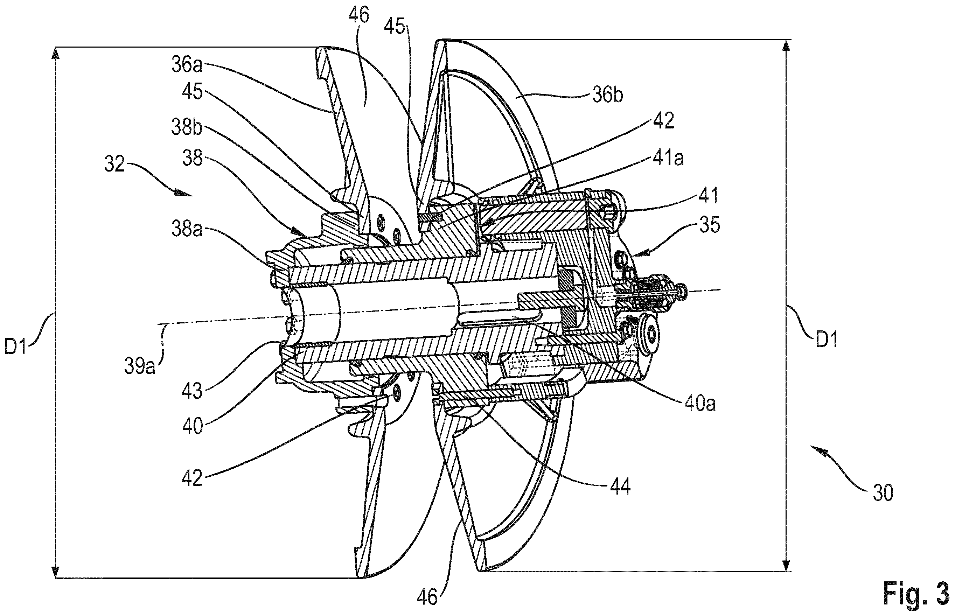

Die Darstellung in Fig. 3 zeigt eine Schnittansicht des Antriebsscheibenpaketes 32 des ersten Getriebemoduls 30 gemäß Fig. 2. Das in Fig. 3 dargestellte Antriebsscheibenpaket 32 des ersten Getriebemoduls 30 unterscheidet sich von dem Antriebsscheibenpaket 32 des zweiten Getriebemoduls 30' nur durch die Außendurchmesser D1 bzw. D2 der Regelscheiben 36a, 36b. Das erste Getriebemodul 30 umfasst drehmomentübertragende Bauteile, zu denen ein hohlzylindrischer Übertragungsabschnitt 38 sowie eine als Hohlwelle 40 ausgeführte Antriebswelle, mit welcher der Übertragungsabschnitt 38 drehfest verbunden ist, gehören. Im Inneren der Hohlwelle 40 befindet sich eine Feder 40a, die Teil einer Nut-Feder-Verbindung ist, die mit einer nicht dargestellten Vorgelegewelle in Eingriff bringbar ist. Der hohlzylindrische Übertragungsabschnitt 38 weist einen im Wesentlichen U-förmigen Querschnitt auf und ist rotationssymmetrisch ausgeführt. Auf der Hohlwelle 40 ist als weiteres drehmomentübertragendes Bauteil eine Nabe 41 angeordnet, die auf der Hohlwelle 40 entlang der Rotationsachse 39a axial verschieblich ist. Die Nabe 41 ist drehfest mit der Hohlwelle 40 verbunden. Die Nabe 41 ist mit der Verstellvorrichtung 35 verbunden, um die Nabe 41 in axialer Richtung zu verschieben.

Der Übertragungsabschnitt 38 ist koaxial zu der Hohlwelle 40 an dieser angeordnet, wobei dieser die Hohlwelle 40 abschnittsweise in axialer Richtung umschließt. Der Übertragungsabschnitt 38 ist mit einer Durchgangsbohrung versehen, deren Innendurchmesser gleich oder größer als der Innendurchmesser der Hohlwelle 40 ist. Zur Verbindung des Übertragungsabschnittes 38 mit der Hohlwelle 40 weist der Übertragungsabschnitt 38 auf einer Seite einen sich radial nach innen erstreckenden ersten Flanschabschnitt 38a auf, mit dem sich der Übertragungsabschnitt 38 an einem freien Ende der Hohlwelle 40 axial abstützt. Der Übertragungsabschnitt 38 ist mittels des ersten Flanschabschnittes 38a durch eine Schraubverbindung 43 drehfest verbunden. Weiterhin weist der Übertragungsabschnitt 38 einen sich radial nach außen erstreckenden zweiten Flanschabschnitt 38b auf, der axial beabstandet zu dem ersten Flanschabschnitt 38a ausgebildet ist.

An dem zweiten Flanschabschnitt 38b ist die Regelscheibe 36a mittels in Umfangsrichtung vorgesehener Schraubverbindungen 42 lösbar befestigt. Die Regelscheibe 36a ist durch die Verbindung mit dem zweiten Flanschabschnitt 38b ortsfest auf der Hohlwelle 40 angeordnet. Auf der Nabe 41 ist die Regelscheibe 36b des Antriebsscheibenpaketes 32 drehfest angeordnet. Die Regelscheibe 36b ist mittels der Nabe 41 in axialer Richtung auf der Hohlwelle 40 verschieblich. Die Regelscheibe 36b ist durch einen Außenflanschabschnitt 41a auf der Nabe 41 mit dieser ebenfalls durch Schraubverbindungen 42 lösbar verbunden. Weiterhin sind Schraubverbindungen 44 vorgesehen, mittels der die Regelscheibe 36b, die Nabe 41 und die Verstellvorrichtung 35 miteinander verbunden sind.

Wie aus der Darstellung in Fig. 3 ersichtlich, sind die beiden Regelscheiben 36a, 36b des Antriebsscheibenpaketes 32 des ersten Getriebemoduls 30 baugleich ausgeführt. Die Regelscheiben 36a, 36b sind dabei im Wesentlichen kegelstumpfförmig ausgebildet. Die Anordnung der Regelscheiben 36a, 36b auf der Hohlwelle 40 erfolgt spiegelbildlich, so dass sich zwischen den Regelscheiben 36a, 36b ein im Wesentlichen V-förmiger Spalt ausbildet, in dem der Keilriemen 34 umläuft. Jede Regelscheibe 36a, 36b weist einen Ringbund 45 auf, der die jeweilige Anschlussstelle zur Verbindung mit dem zweiten Flanschabschnitt 38b bzw. der Nabe 41 bildet, an denen die Regelscheibe 36a, 36b des Antriebsscheibenpaketes 32 befestigt sind. Beide Regelscheiben 36a, 36b weisen gleiche Außendurchmesser D1 auf.

An den Ringbund 45 der jeweiligen Regelscheibe 36a, 36b schließt sich ein radialer Abschnitt 46 an, der geneigt ausgeführt ist. Die einander zugewandten radialen Abschnitte 46 der Regelscheiben 36a, 36b bilden aufgrund der jeweiligen Neigung den im Wesentlichen V-förmigen Spalt aus.

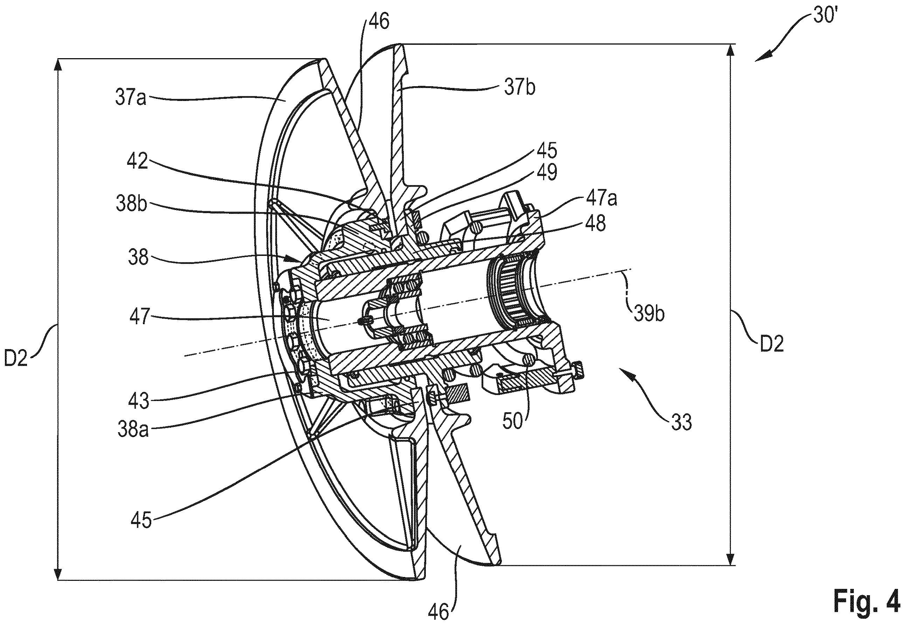

Fig. 4 zeigt eine Schnittansicht des Abtriebsscheibenpaketes 33 des zweiten Getriebemoduls 30' gemäß Fig. 2. Das Abtriebsscheibenpaket 33 des ersten Getriebemoduls 30 unterscheidet sich von dem in Fig. 4 dargestellten Abtriebsscheibenpaket 33 des zweiten Getriebemoduls 30' nur durch die Außendurchmesser D1 bzw. D2 der Regelscheiben 37a, 37b. Für Bauteile bzw. Komponenten, die mit denen des Antriebsscheibenpaketes 32 baugleich bzw. identisch sind, werden die gleichen Bezugszeichen verwendet. Das Abtriebsscheibenpaket 33 umfasst zwei mit den Regelscheiben 36a, 36b des Antriebsscheibenpaketes 32 baugleich ausgeführte Regelscheiben 37a, 37b. Baugleich im Sinne der Erfindung heißt, dass zumindest die geometrische Form der Regelscheiben 36a, 36b, 37a, 37b identisch ist. Insbesondere weist der jeweilige Ringbund 45 der Regelscheiben 36a, 36b, 37a, 37b identische Abmessungen auf. Die beiden Regelscheiben 37a, 37b weisen gleiche Außendurchmesser D2 auf. Weiterhin ist ein ebenfalls baugleicher bzw. identischer Übertragungsabschnitt 38 vorgesehen, der durch Schraubverbindungen 42 mit einer Hohlwelle 47 lösbar verbunden ist. Auf dem Übertragungsabschnitt 38 ist die Regelscheibe 37a ortsfest angeordnet. Die Befestigung der Regelscheibe 37a an dem Übertragungsabschnitt 38 erfolgt zwischen dem Ringbund 45 und dem zweiten Flanschabschnitt 38b mittels der Schraubverbindungen 42.

Auf der Hohlwelle 47 ist eine Nabe 48 drehfest angeordnet, die in axialer Richtung entlang der Rotationsachse 39b verschiebbar ist. Die Nabe 48 ist im Wesentlichen hohlzylindrisch ausgeführt und weist einen radialen Absatz 49 auf. Mit dem radialen Absatz 49 ist die Regelscheibe 37b mittels der Schraubverbindungen 42 lösbar verbunden. An einem Ende der Hohlwelle 47, das dem Übertragungsabschnitt 38 gegenüberliegt, befindet sich ein Federteller 47a, an dem ein hülsenförmiger Abschnitt 47b angeordnet ist, beispielsweise durch Verschrauben. Zwischen dem radialen Absatz 49 und dem Federteller 47a stützt sich eine koaxial zu der Hohlwelle 47 angeordnete Druckfeder 50 ab. Die Druckfeder 50 beaufschlagt die axial verschiebbare Nabe 48 mit einer in axialer Richtung wirkenden Federkraft, welche die beiden Regelscheiben 37a, 37b aufeinander zu bewegt. Der hülsenförmige Abschnitt 47b umschließt die Druckfeder 50 abschnittsweise in Umfangsrichtung. Das erste Getriebemodul 30 umfasst als Grundkomponenten die baugleichen Regelscheiben 36a, 36b; 37a, 37b des Antriebsscheibenpaketes 32 und des Abtriebsscheibenpaketes 33, die drehmomentübertragenden Bauteile Hohlwelle 40 bzw. 47, Nabe 41 bzw. 48 sowie die beiden baugleichen Übertragungsabschnitte 38.

In einer ersten Konfiguration des ersten Getriebemoduls 30 gemäß Fig. 2 sind die Außendurchmesser D1 der Regelscheiben 36a, 36b des Antriebsscheibenpaketes 32 und die Außendurchmesser D1 der Regelscheiben 37a, 37b des Abtriebsscheibenpaketes 33 gleich gewählt. Es sind vier baugleiche Regelscheiben 36a, 36b, 37a, 37b in dem ersten Getriebemodul 30 gemäß einer ersten Konfiguration verbaut.

Der von dem stufenlosen Getriebe 31 übertragbare Drehzahlbereich variiert bekanntermaßen mit dem Außendurchmesser D1, D2 der Regelscheiben 36a, 36b; 37a, 37b des Antriebsscheibenpaketes 32 und des Abtriebsscheibenpaketes 33. Zumindest ein weiteres Getriebemodul 30' gemäß der Fig. 2 mit einem von dem ersten Getriebemodul 30 abweichenden Drehzahlbereich lässt sich dadurch realisieren, dass die Regelscheiben 36a, 36b des Antriebsscheibenpaketes 32 und die Regelscheiben 37a, 37b des Abtriebsscheibenpaketes 33 jeweils den gleichen Außendurchmesser D2 aufweisen, wobei die Außendurchmesser D2 der Regelscheiben 36a, 36b, 37a, 37b des zweiten Getriebemoduls 30' kleiner als die Außendurchmesser D1 der Regelscheiben 36a, 36b, 37a, 37b des ersten Getriebemoduls 30 sind. Somit stehen zumindest zwei Getriebemodule 30, 30' zur Verfügung, die für unterschiedliche Getriebe 31, 31' innerhalb einer Baureihe für unterschiedliche Arbeitsorgane 22 oder baureihenübergreifend für eine Anzahl n unterschiedlicher Baureihen der landwirtschaftlichen Erntemaschine 1 verwendet werden können.

Eine Erweiterung der Kombinationsvielfalt ergibt sich daraus, dass aufgrund der Baugleichheit im Sinne einer einheitlichen geometrischen Form der Regelscheiben 36a, 36b, 37a, 37b und der identischen Ausführung der Ringbünde 45 der Regelscheiben 36a, 36b und der Regelscheiben 37a, 37b diese untereinander zwischen den beiden Getriebemodulen 30, 30' austauschbar sind. So kann das Antriebsscheibenpaket 32 gemäß Fig. 3 mit Regelscheiben 36a, 36b mit dem Außendurchmesser D1 und das Abtriebsscheibenpaket 33 gemäß Fig. 4 mit Regelscheiben 37a, 37b mit dem Außendurchmesser D2 ausgeführt sein, wobei der Außendurchmesser D1 größer als der Außendurchmesser D2 ist. Eine umgekehrte Ausgestaltung ist ebenfalls möglich, wenn die Regelscheiben 36a, 36b des Antriebsscheibenpaketes 32 den Außendurchmesser D2 und die Regelscheiben 36a, 36b des Abtriebsscheibenpaketes 33 den Außendurchmesser D1 aufweisen.

Somit sind durch eine Variation zumindest der Grundkomponenten Regelscheiben 36a, 36b; 37a, 37b, Übertragungsabschnitte 38, Naben 41, 48 und Hohlwellen 40, 47, von denen zumindest die Regelscheiben 36a, 36b; 37a, 37b und Übertragungsabschnitt 38 baugleich ausgeführt sind, zumindest zwei Getriebemodule 30, 30' ausbildbar, die verschiedene stufenlose Getriebe 31, 31' für ein eine Anzahl n unterschiedlicher Baureihen landwirtschaftlicher Erntemaschinen 1 abbilden, wobei zwei der Grundkomponenten zur Führung und Kraftübertragung, die Regelscheiben 36a, 36b; 37a, 37b und die Übertragungsabschnitte 38 im Wesentlichen baugleich oder baugleich ausgeführt sind. Dadurch wird erreicht, dass diese im Wesentlichen baugleichen Grundkomponenten sowohl auf der Antriebsseite und der Abtriebsseite des jeweiligen stufenlosen Getriebemoduls 30, 30' als auch innerhalb verschiedener Baureihen der Erntemaschinen 1 untereinander austauschbar sind.

### Bezugszeichenliste

| | | | |
|---|---|---|---|
| 1 | Erntemaschine | 33 | Abtriebsscheibenpaket |
| 2 | Kabine | 34 | Keilriemen |
| 3 | Korntank | 35 | Verstellvorrichtung |
| 4 | Brennkraftmaschine | 36a | Regelscheibe |
| 5 | Erntevorsatz | 36b | Regelscheibe |
| 5a | Querförderschnecke | 37a | Regelscheibe |
| 6 | Haspel | 37b | Regelscheibe |
| 7 | Schrägförderer | 38 | Übertragungsabschnitt |
| 8 | Dresch- und Trenneinrichtung | 38a | Erster Flanschabschnitt |
| 9 | Vorbeschleunigungstrommel | 38b | Zweiter Flanschabschnitt |
| 9a | Abscheidekorb | 39a | Rotationsasche |
| 10 | Dreschtrommel | 39b | Rotationsasche |
| 10a | Abscheidekorb | 40 | Hohlwelle |
| 11 | Abscheidetrommel | 41 | Nabe |
| 11a | Abscheidekorb | 41a | Außenflanschabschnitt |
| 12 | Vorbereitungsboden | 42 | Schraubverbindung |
| 13 | Reinigungsvorrichtung | 43 | Schraubverbindung |
| 14 | Reinigungsgebläse | 44 | Schraubverbindung |
| 15 | Körnerschnecke | 45 | Ringbund |
| 16 | Abscheideeinrichtung | 46 | Radiale Abschnitt |
| 17 | Förderorgan | 47 | Hohlwelle |
| 18 | Abscheidegehäuse | 47a | Federteller |
| 19 | Rücklaufboden | 47b | Hülsenförmiger Abschnitt |
| 20 | Förderschnecke | 48 | Nabe |
| 21 | Strohhäcksler | 49 | Radialer Absatz |
| 22 | Arbeitsorgan | 50 | Druckfeder |
| | | D1 | Außendurchmesser |
| 30, 30' | Getriebemodul | D2 | Außendurchmesser |
| 31, 31' | Stufenloses Getriebe | | |
| 32 | Antriebsscheibenpaket | | |

## Patentansprüche

1. Baukastensystem, umfassend zumindest ein stufenloses Getriebe (31, 31') zum Antreiben zumindest eines Arbeitsorgans (22) einer Erntemaschine (1), wobei das zumindest eine stufenlose Getriebe (31, 31') folgende Grundkomponenten umfasst:
- ein Antriebsscheibenpaket (32) und ein Abtriebsscheibenpaket (33), die jeweils zwei konische Regelscheiben (36a, 36b; 37a, 37b) aufweisen, die jeweils um eine Rotationsachse (39a, 39b) drehbar sind,
- drehmomentübertragende Bauteile, auf denen das Antriebsscheibenpaket (32) und das Abtriebsscheibenpaket (33) angeordnet sind, wobei die drehmomentübertragenden Bauteile jeweils eine Antriebswelle (40, 47), die als Hohlwellen (40, 47) ausgeführt sind, eine Nabe (41, 48), die jeweils drehfest mit der Hohlwelle (40, 47) verbunden und auf der jeweiligen Hohlwelle (40, 47) entlang der Rotationsachse (39a, 39b) axial verschieblich angeordnet ist, und einen hohlzylindrischen Übertragungsabschnitt (38), der drehfest mit der jeweiligen Hohlwelle (40, 47) verbunden ist, umfassen,
- wobei von dem Antriebsscheibenpaket (32) und dem Abtriebsscheibenpaket (33) jeweils zumindest eine Regelscheibe (36b, 37b) axial verschiebbar auf der jeweiligen Hohlwelle (40, 47) angeordnet ist,
wobei durch eine Variation der Grundkomponenten zumindest zwei Getriebemodule (30, 30') ausbildbar sind, die verschiedene stufenlose Getriebe (31, 31') abbilden, wobei zwei der Grundkomponenten (36a, 36b, 37a, 37b, 38) der zumindest zwei Getriebemodule (30, 30') zur Kraftübertragung baugleich ausgeführt sind, **dadurch gekennzeichnet, dass** die Regelscheiben (36a, 36b, 37a, 37b) des Antriebsscheibenpaketes (32) und des Abtriebsscheibenpaketes (33) der zumindest zwei Getriebemodule (30, 30') einen identischen strukturellen Aufbau aufweisen, so dass die geometrische Form der Regelscheiben (36a, 36b, 37a, 37b), die innerhalb eines der Getriebemodule (30, 30') und übergreifend für die zumindest zwei Getriebemodule (30, 30') verwendet werden, identisch ist, und dass die hohlzylindrischen Übertragungsabschnitte (38) auf Antriebsseite und Abtriebsseite der zumindest zwei Getriebemodule (30, 30') baugleich ausgeführt sind, wobei die hohlzylindrischen Übertragungsabschnitte (38) auf der Antriebsseite und der Abtriebsseite dazu ausgebildet sind, die jeweilige Regelscheibe (36a, 37a) des Antriebsscheibenpaketes (32) als auch des Abtriebsscheibenpaketes (33) aufzunehmen, die jeweils ortsfest auf der jeweiligen Hohlwelle (40, 47) angeordnet sind.

2. Baukastensystem nach Anspruch 1 **dadurch gekennzeichnet, dass** die Regelscheiben (36a, 36b, 37a, 37b) des Antriebsscheibenpaketes (32) und des Abtriebsscheibenpaketes (33) sowie die hohlzylindrischen Übertragungsabschnitte (38) untereinander austauschbar sind.

3. Baukastensystem nach Anspruch 2 **dadurch gekennzeichnet, dass** die Regelscheiben (36a, 36b, 37a, 37b) mit identischen Abmessungen aufweisenden Ringbünden (45) ausgeführt sind.

4. Baukastensystem nach einem der vorangehenden Ansprüche, **dadurch gekennzeichnet, dass** das jeweilige Antriebsscheibenpaket (32) und Abtriebsscheibenpaket (33) der zumindest zwei Getriebemodule (30, 31) jeweils Regelscheiben (36a, 36b, 37a, 37b) mit identischen Außendurchmessern (D1, D2) aufweisen.

5. Baukastensystem nach Anspruch 4, **dadurch gekennzeichnet, dass** alle Regelscheiben (36a, 36b; 37a, 37b) eines ersten Getriebemoduls (30) jeweils einen gleichen Außendurchmesser (D1) aufweisen und alle Regelscheiben (36a, 36b; 37a, 37b) eines zweiten Getriebemoduls (30') jeweils einen gleichen Außendurchmesser (D2) aufweisen.

6. Baukastensystem nach Anspruch 4 **dadurch gekennzeichnet, dass** sich zumindest ein zweites Getriebemodul (30') mit einem von dem ersten Getriebemodul (30) abweichenden Drehzahlbereich dadurch realisieren lässt, dass die Außendurchmesser (D2) der Regelscheiben (36a, 36b, 37a, 37b) des zweiten Getriebemoduls (30') kleiner als die Außendurchmesser (D1) der Regelscheiben (36a, 36b, 37a, 37b) des ersten Getriebemoduls (30) sind.

7. Baukastensystem nach der vorangehenden Ansprüche, **dadurch gekennzeichnet, dass** die Regelscheiben (36a, 36b, 37a, 37b) des Antriebsscheibenpaketes (32) und/oder des Abtriebsscheibenpaketes (33) so ausgestaltet sind, dass sie zwischen den zumindest zwei Getriebemodulen (30, 30') austauschbar sind.

8. Baukastensystem nach einem der der vorangehenden Ansprüche, **dadurch gekennzeichnet, dass** die Außendurchmesser (D1, D2) der Regelscheiben (36a, 36b, 37a, 37b) des Antriebsscheibenpaketes (32) und/oder des Abtriebsscheibenpaketes (33) zwischen den zumindest zwei Getriebemodulen (30, 30') variieren.

9. Baukastensystem nach einem der der vorangehenden Ansprüche, **dadurch gekennzeichnet, dass** die Regelscheiben (36a, 36b, 37a, 37b) des jeweiligen Antriebsscheibenpaketes (32) bzw. Abtriebsscheibenpaketes (33) mittels lösbarer Verbindungen, Schraubverbindungen (42, 44), an der jeweiligen Nabe (41, 48) bzw. dem jeweiligen hohlzylindrischen Übertragungsabschnitt (38) befestigt sind

10. . Baukastensystem nach einem der vorangehenden Ansprüche, **dadurch gekennzeichnet, dass** die Regelscheiben (36a, 36b, 37a, 37b) und die hohlzylindrischen Übertragungsabschnitte (38) als Gussteile ausgebildet sind.

11. Erntemaschine (1) mit zumindest einem Arbeitsorgan (22), das durch zumindest einem stufenlosen Getriebe (31, 31') angetrieben wird, **dadurch gekennzeichnet, dass** das zumindest ein stufenloses Getriebe (31, 31') als ein mittels eines Baukastensystems nach einem der Ansprüche 1 bis 10 hergestelltes Getriebemodul (30, 30') ausgebildet ist.

12. Erntemaschine (1) nach Anspruch 11 **dadurch gekennzeichnet, dass** das zumindest ein stufenloses Getriebe (31, 31') dem Antrieb von als Vorsatzgerät (5), Dresch- und Trenneinrichtung (8) und/oder Abscheideeinrichtung (16) ausgeführten Arbeitsorganen (22) der Erntemaschine (1) einer Baureihe dient.

## Claims

1. A modular system comprising at least one continuously variable transmission (31, 31') for driving at least one working unit (22) of a harvesting machine (1), wherein the at least one continuously variable transmission (31, 31') comprises the following basic components:
- a drive pulley set (32) and a driven pulley set (33) which each have two conical adjustable pulleys (36a, 36b; 37a, 37b), which are respectively rotatable about an axis of rotation (39a, 39b),
- torque-transmitting components on which the drive pulley set (32) and the driven pulley set (33) are disposed, wherein the torque-transmitting components are respectively a drive shaft (40, 47) configured as a hollow shaft (40, 47), a hub (41, 48) which is respectively connected to the hollow shaft (40, 47) so as to be fixed against rotation and axially displaceably disposed on the respective hollow shaft (40, 47) along the axis of rotation (39a, 39b), and
- a hollow cylindrical transmission section (38) which is connected to the respectively hollow shaft (40, 47) so as to be fixed against rotation,
- wherein a respective at least one adjustable pulley (36b, 37b) is axially displaceably disposed on the respectively hollow shaft (40, 47) of the drive pulley set (32) and of the driven pulley set (33),
wherein, by means of a variation in the basic components, at least two transmission modules (30, 30') can be constructed which form different continuously variable transmissions (31, 31'), wherein two of the basic components (36a, 36b, 37a, 37b, 38) of the at least two transmission modules (30, 30') are identical in construction for the purposes of power transmission, **characterized in that** the adjustable pulleys (36a, 36b, 37a, 37b) of the drive pulley set (32) and of the driven pulley set (33) of the at least two transmission modules (30, 30') have a structurally identical construction, so that the geometrical shape of the adjustable pulleys (36a, 36b, 37a, 37b) which are used within one of the transmission modules (30, 30') and are used universally for the at least two transmission modules (30, 30') is identical, and **in that** the hollow cylindrical transmission sections (38) on the drive side and the driven side of the at least two transmission modules (30, 30') are identical in construction, wherein the hollow cylindrical transmission sections (38) on the drive side and the driven side are configured so as to receive the respective adjustable pulley (36a, 37a) of the drive pulley set (32) as well as of the driven pulley set (33) which are respectively immovably disposed on the respective hollow shaft (40, 47).

2. The modular system according to claim 1, **characterized in that** the adjustable pulleys (36a, 36b, 37a, 37b) of the drive pulley set (32) and of the driven pulley set (33) as well as the hollow cylindrical transmission sections (38) are interchangeable.

3. The modular system according to claim 2, **characterized in that** the adjustable pulleys (36a, 36b, 37a, 37b) are configured with annular collars (45) which have identical dimensions.

4. The modular system according to one of the preceding claims, **characterized in that** the respective drive pulley set (32) and driven pulley set (33) of the at least two transmission modules (30, 31) each have adjustable pulleys (36a, 36b, 37a, 37b) with identical external diameters (D1, D2).

5. The modular system according to claim 4, **characterized in that** all of the adjustable pulleys (36a, 36b; 37a, 37b) of a first transmission module (30) each have an identical external diameter (D1) and all of the adjustable pulleys (36a, 36b; 37a, 37b) of a second transmission module (30') each have an identical external diameter (D2).

6. The modular system according to claim 4, **characterized in that** at least one second transmission module (30') can be produced with a range of speeds which differs from that of the first transmission module (30), **in that** the external diameter (D2) of the adjustable pulleys (36a, 36b, 37a, 37b) of the second transmission module (30') is smaller than the external diameter (D1) of the adjustable pulleys (36a, 36b, 37a, 37b) of the first transmission module (30).

7. The modular system according to one of the preceding claims, **characterized in that** the adjustable pulleys (36a, 36b, 37a, 37b) of the drive pulley set (32) and/or of the driven pulley set (33) are configured such that they are interchangeable between the at least two transmission modules (30, 30').

8. The modular system according to one of the preceding claims, **characterized in that** the external diameter (D1, D2) of the adjustable pulleys (36a, 36b, 37a, 37b) of the drive pulley set (32) and/or of the driven pulley set (33) varies between the at least two transmission modules (30, 30').

9. The modular system according to one of the preceding claims, **characterized in that** the adjustable pulleys (36a, 36b, 37a, 37b) of the respective drive pulley set (32) or of the driven pulley set (33) are secured by means of releasable connections, screw connections (42, 44), to the respective hub (41, 48) or to the respective hollow cylindrical transmission section (38).

10. The modular system according to one of the preceding claims, **characterized in that** the adjustable pulleys (36a, 36b, 37a, 37b) and the hollow cylindrical transmission sections (38) are configured as castings.

11. A harvesting machine (1) with at least one working unit (22) which is driven via at least one continuously variable transmission (31, 31'), **characterized in that** the at least one continuously variable transmission (31, 31') is configured as a transmission module (30, 30') produced by means of a modular system according to one of claims 1 to 10.

12. The harvesting machine (1) according to claim 11, **characterized in that** the at least one continuously variable transmission (31, 31') functions as the drive for working units (22) configured as a front attachment (5), threshing and separating device (8) and/or separating device (16) of the harvesting machines (1) of a production series.

## Revendications

1. Système modulaire, incluant au moins une transmission à variation continue (31, 31') pour l'entraînement d'au moins un organe de travail (22) d'une machine de récolte (1), la au moins une transmission à variation continue (31, 31') incluant les composants de base suivants :
- un bloc de flasques menant (32) et un bloc de flasques mené (33), lesquels comportent respectivement deux flasques de régulation coniques (36a, 36b ; 37a, 37b) qui sont respectivement rotatifs autour d'un axe de rotation (39a, 39b),
- des éléments structurels transmetteurs de moment de rotation sur lesquels sont disposés le bloc de flasques menant (32) et le bloc de flasques mené (33), les éléments structurels transmetteurs de moment de rotation incluant respectivement un arbre d'entraînement (40, 47), qui est conformé en arbre creux (40, 47), un moyeu (41, 48), qui est relié à l'arbre creux (40, 47) de manière solidaire en rotation et qui est disposé sur l'arbre creux (40, 47) à coulissement axial le long de l'axe de rotation (39a, 39b), et une portion de transmission cylindrique creuse (38) qui est reliée à l'arbre creux respectif (40, 47) de manière solidaire en rotation,
- respectivement au moins un flasque de régulation (36b, 37b) du bloc de flasques menant (32) et du bloc de flasques mené (33) étant disposé à coulissement axial sur l'arbre creux respectif (40, 47),
- par une variation des composants de base pouvant être constitués au moins deux modules de transmission (30, 30') qui représentent différentes transmissions à variation continue (31, 31'), deux des composants de base (36a, 36b, 37a, 37b, 38) des au moins deux modules de transmission (30, 30') étant conçus de façon structurellement identique pour la transmission de force, **caractérisé en ce que** les flasques de régulation (36a, 36b, 37a, 37b) du bloc de flasques menant (32) et du bloc de flasques mené (33) des au moins deux modules de transmission (30, 30') présentent une constitution structurelle identique, de sorte que la forme géométrique des flasques de régulation (36a, 36b, 37a, 37b) qui sont employés à l'intérieur d'un des modules de transmission (30, 30') et globalement pour les au moins deux modules de transmission (30, 30') est identique, et **en ce que** les portions de transmission cylindriques creuses (38) sur le côté menant et sur le côté mené des au moins deux modules de transmission (30, 30') sont structurellement identiques, les portions de transmission cylindriques creuses (38) sur le côté menant et sur côté mené étant conçues pour recevoir le flasque de régulation respectif (36a, 37a) du bloc de flasques menant (32) de même que du bloc de flasques mené (33), lesquels sont disposés respectivement en position fixe sur l'arbre creux respectif (40, 47).

2. Système modulaire selon la revendication 1, **caractérisé en ce que** les flasques de régulation (36a, 36b, 37a, 37b) du bloc de flasques menant (32) et du bloc de flasques mené (33) ainsi que les portions de transmission cylindriques creuses (38) sont échangeables entre eux.

3. Système modulaire selon la revendication 2, **caractérisé en ce que** les flasques de régulation (36a, 36b, 37a, 37b) sont réalisés avec des collets annulaires (45) présentant des dimensions identiques.

4. Système modulaire selon une des revendications précédentes, **caractérisé en ce que** les bloc de flasques menant (32) et bloc de flasques mené (33) respectifs des au moins deux modules de transmission (30, 31) comportent respectivement des flasques de régulation (36a, 36b, 37a, 37b) avec des diamètres extérieurs (D1, D2) identiques.

5. Système modulaire selon la revendication 4, **caractérisé en ce que** tous les flasques de régulation (36a, 36b ; 37a, 37b) d'un premier module de transmission (30) comportent respectivement un même diamètre extérieur (D1) et tous les flasques de régulation (36a, 36b ; 37a, 37b) d'un second module de transmission (30') présentent respectivement un même diamètre extérieur (D2).

6. Système modulaire selon la revendication 4, **caractérisé en ce qu'**au moins un second module de transmission (30') peut être réalisé avec une plage de régimes différente du premier module de transmission (30) du fait que les diamètres extérieurs (D2) des flasques de régulation (36a, 36b, 37a, 37b) du second module de transmission (30') sont inférieurs aux diamètres extérieurs (D1) des flasques de régulation (36a, 36b, 37a, 37b) du premier module de transmission (30).

7. Système modulaire selon les revendications précédentes, **caractérisé en ce que** les flasques de régulation (36a, 36b, 37a, 37b) du bloc de flasques menant (32) et/ou du bloc de flasques mené (33) sont conçus de façon à être échangeables entre les au moins deux modules de transmission (30, 30').

8. Système modulaire selon une des des revendications précédentes, **caractérisé en ce que** les diamètres extérieurs (D1, D2) des flasques de régulation (36a, 36b, 37a, 37b) du bloc de flasques menant (32) et/ou du bloc de flasques mené (33) varient entre les au moins deux modules de transmission (30, 30').

9. Système modulaire selon une des des revendications précédentes, **caractérisé en ce que** les flasques de régulation (36a, 36b, 37a, 37b) des bloc de flasques menant (32), respectivement bloc de flasques mené (33) respectifs sont fixés au moyeu respectif (41, 48), respectivement à la portion de transmission cylindrique creuse respective (38) au moyen de liaisons détachables, de liaisons vissées (42, 44).

10. Système modulaire selon une des revendications précédentes, **caractérisé en ce que** les flasques de régulation (36a, 36b, 37a, 37b) et les portions de transmission cylindriques creuses (38) sont conçus sous la forme de pièces coulées.

11. Machine de récolte (1) comprenant au moins un organe de travail (22) qui est entraîné par l'intermédiaire d'au moins une transmission à variation continue (31, 31'), **caractérisée en ce qu'**au moins une transmission à variation continue (31, 31') est conçue sous la forme d'un module de transmission (30, 30') fabriqué au moyen d'un système modulaire selon une des revendications 1 à 10.

12. Machine de récolte (1) selon la revendication 11, **caractérisée en ce que** la au moins une transmission à variation continue (31, 31') sert à l'entraînement d'organes de travail (22) de la machine de récolte (1) d'une gamme de fabrication conçus sous la forme d'un outil frontal (5), d'un équipement de battage et de division (8) et/ou d'un élément séparateur (16).
